# EUROPEAN PATENT APPLICATION

(11) **EP 4 759 547 A1**
(43) Date of publication of application: **17.06.2026**
(21) Application number: 24218851.4
(22) Date of filing: 10.12.2024
(51) Int. Cl.: B41J 2/21, B41J 11/00, B41J 25/308, H04N 1/54

(54) **METHOD FOR PRINT LAYERS OF INK AND A FLATBED PRINTER THEREFOR**

(71) Applicant: Canon Production Printing Holding B.V., 5914 HH Venlo (NL)
(72) Inventor: GERAN MALEK KHEYLI, Sina, Venlo (NL); WEIJKAMP, Clemens T., Venlo (NL); VAN DER ASDONK, Pim, Venlo (NL); LOENEN, Arjan C.Y., Venlo (NL)
(74) Representative: Canon Production Printing IP Department

(57) **Abstract**

A method for a UV curable printer (5) comprising a medium support surface (11) for supporting the print media, a print head assembly for ejecting droplets of structure ink (S), white ink and coloured ink forming a relief print on the print media and a print controller for controlling the printing of the relief print in layers. Each layer is deposited in a predetermined plurality of passes of the print head assembly over the medium support surface. The print controller receives a print job comprising a colour image with colour information per pixel comprising a colour per pixel which is intended to be achieved by depositing the coloured ink, and a height image with height information per pixel comprising a height per pixel which is intended to be achieved by depositing a plurality of elevation layers of structure ink. The print controller determines besides the plurality of elevation layers at least one anti-contouring layer of structure ink to prevent contouring artefacts and at least coloured layer of coloured ink to form the colour image. The print head assembly subsequently prints the plurality of elevation layers, the at least one anti-contouring layer and the at least one colour layer. The print controller creating a last in time elevation layer intended to be printed in the predetermined plurality of passes, wherein the last in time elevation layer is formed by droplets of structure ink and white ink.

## Description

### BACKGROUND OF THE INVENTION

### 1. Field of the invention

The invention relates to a method for a UV curable printer comprising a medium support surface for supporting the print media, a print head assembly for ejecting droplets of structure ink, white ink and coloured ink forming a relief print on the print media and a print controller for controlling the printing of the relief print in layers, each layer to be deposited in a predetermined plurality of passes of the print head assembly over the medium support surface, the method comprising the steps of the print controller receiving a print job comprising a colour image with colour information per pixel comprising a colour per pixel which is intended to be achieved by depositing the coloured ink, and a height image with height information per pixel comprising a height per pixel which is intended to be achieved by depositing a plurality of elevation layers of structure ink, the print controller determining besides the plurality of elevation layers at least one anti-contouring layer of structure ink to prevent contouring artefacts and at least coloured layer of coloured ink to form the colour image, and the print head assembly subsequently printing the plurality of elevation layers, the at least one anti-contouring layer and the at least one colour layer. The predetermined number of passes depends on a selected print mode of the printer.

### 2. Description of Background Art

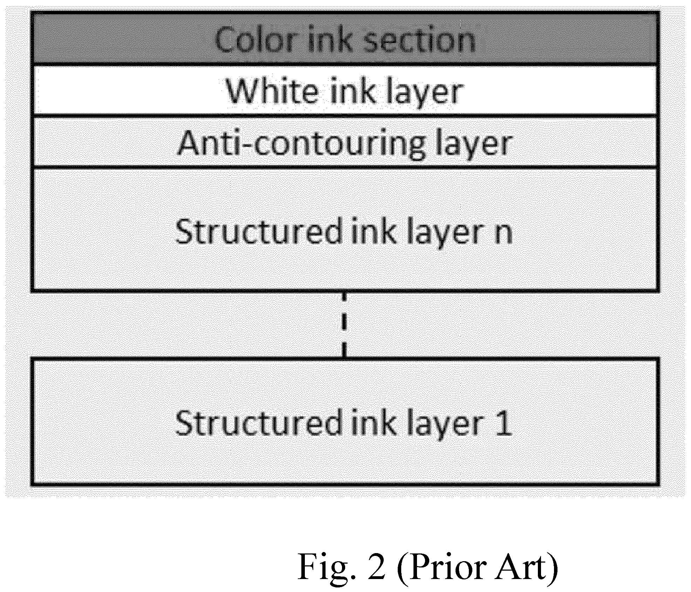

Elevated printing also known as 2.5D printing is known to create relief prints with structure ink. Structure ink is ink to build up height and/or texture and/or relief. Structure ink can be a special ink but also transparent ink, varnish and even colour inks can be used as an structure ink. Nowadays structure ink is used to build the elevation, and before putting the colour on top, extra layers are also printed to obtain a good print quality, i.e. at least one white layer and anti-contouring layers as shown in Fig. 2. One of the artifacts in elevated printing is contouring and one of the extra layers is an anti-contouring layer to tackle said problem. By adding the white layer, a perceptual lightness (opaqueness) and gloss of the at least one white layer is sufficient and constant. By reducing the amount of white ink layers, the thickness per layer is increased, which ends up in a reduction of mechanical strength of the colour and white layers, i.e. less scratch resistant, less curing and less cohesion. But on the other hand, adding the extra layers like the at least one white layer reduces the productivity.

### SUMMARY OF THE INVENTION

It is an object of the invention to provide a method to create relief prints with as few layers as possible.

In accordance with the present invention, the method comprises the steps of the print controller creating a last in time elevation layer intended to be printed in the predetermined plurality of passes, wherein the last in time elevation layer is formed by droplets of structure ink and white ink. By doing so, separate white layers are avoided by providing the white ink in the last in time elevation layer and the object of the invention is achieved.

According to a first embodiment the method comprises the steps of in a first part of the predetermined plurality of passes of the last in time elevation layer, depositing the structure ink, and in a second part of the predetermined plurality of passes of the last in time elevation layer, depositing the white ink on top of the structure ink deposited in the first part.

According to a second embodiment the method comprises the step of mixing the white ink in each pass of the last in time elevation ink layer with the structure ink.

According to the first and the second embodiment the last in time elevation layer of white and structure ink has higher scratch resistant compare to a single layer of white ink. In the first embodiment a coverage of jetted ink is higher than in single white layer, resulting in a higher amount of ink per layer and per pass, a higher surface temperature, more ink flow, in a smoother surface and a better adhesion to the coming layer. In the second embodiment the last in time elevation layer is jetted on a high temperature surface since the white ink is jetted on a high temperature surface which has high ink load of structure ink (compare to a separate white layer) which results in more spread of white ink and a smoother surface. Both embodiments offer a higher mechanical strength and an improved productivity, and a blockage or opaqueness function (i.e. perceptual lightness L*) of the white and structure inks layer is kept the same as single white layer.

In addition, both embodiments give an advantage on curing degree or chemical interaction as well. In the second embodiment, by mixing the white and structure ink, the photo initiators in structure ink help in a curing level of white ink as well. Also in the first embodiment, at the moment of application of two layers on top of each other a diffusion process starts from one layer to the other. The diffusion rate obviously depends on the molecular size. A so-called interpenetrating network is then created on the surface of the two inks. So the network of the structure ink and white ink are interwoven after curing which produces very good adhesion.

According to an embodiment the method comprises the steps of the print controller receiving the print job comprising a gloss image with gloss information per pixel of the colour image, and the print head assembly depositing varnish ink on top of the coloured ink in accordance with the gloss image.

The present invention also relates to a UV curable printer comprising a medium support surface for supporting print media to be printed upon, a print head assembly for ejecting colour inks, white ink, structure ink forming a relief print on the print media and a print controller for controlling the printing of a colour image on the print media in multiple layers as to form the relief print, wherein the print controller is configured to perform the steps of a method according to the present invention.

According to an embodiment the print head assembly is configured to deposit varnish ink on top of deposited coloured ink.

The present invention also relates to a non-transitory software medium comprising executable program code configured to, when executed on a print controller of a printer, enable the print controller to perform the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a UV curable printer;
Fig. 2 is a schematic diagram of the layers according to the prior art;
Fig. 3 - 4 are schematic drawings of the layers with the white ink in the last pass(es) of the last structure layer according to embodiments of the method according to the present invention;
Fig. 5 is a schematic flow diagram of the method according a first embodiment of the present invention;
Fig. 6 is a schematic flow diagram of the method according a second embodiment of the present invention; and
Fig. 7 is a schematic drawing of the recording medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

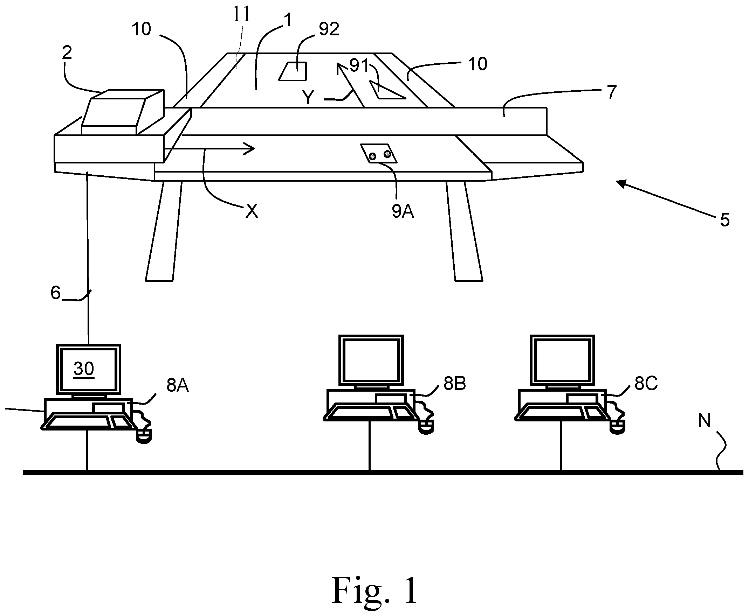

Fig. 1 is a UV curable printer 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the printer 5 connected to a control unit of the printer 5 via a connection 6. The printer 5 further comprises a print head assembly 2 attached to an armature 7 for applying UV curable colorants, for example cyan (C), magenta (M), yellow (Y), black (K) and white (W) colorant, and optionally varnish ink to pieces 9, 9A of print media placed on a flat bed surface 1 in order to obtain a relief print. The armature 7 may comprise a gantry above the flat bed surface 1 as shown in Fig. 1 or a robot arm (not shown) moving in a plurality of directions over the flat bed surface 1. The flat bed surface 1 is at least partially reachable by the print head assembly 2. The pieces of media may be so small that they are completely placed on the flat bed surface 1, but a piece of media which is larger than the medium support surface, in which case an image which is going to cover the whole piece of media must be printed into a plurality of parts of the image, is not excluded. A first piece 9A has already been printed upon, while the other pieces 91, 92 are not provided with any recording material yet. The print head assembly 2 reciprocally scans the flat bed surface 1 in the second direction X along a gantry 7 perpendicular to a first direction Y of the gantry 7 over the flat bed surface 1 along guiding parts 10. During printing of an image on the piece 9, 9A of media the piece 91, 92, 9A of media may not be moved on the flat bed surface 1. This way of working is advantageous for rigid print media. A print head which is as wide as the medium support surface may also be envisaged within the scope of the invention. Such a print head may be moveable relatively to the print media in at least one direction over the flat bed surface 1.

The flat bed surface 1 comprises a medium support surface 11. The medium support surface 11 is provided with through-holes to allow air to pass through the medium support surface 11. A pressure chamber (not shown) is provided below medium support surface 11 as part of a suction chamber assembly. By applying a negative pressure in the pressure chamber, print media can be securely and flatly held against the medium support surface 11.

Fig. 2 is a schematic diagram of a building up of the layers according to the prior art which has been elucidated hereinbefore.

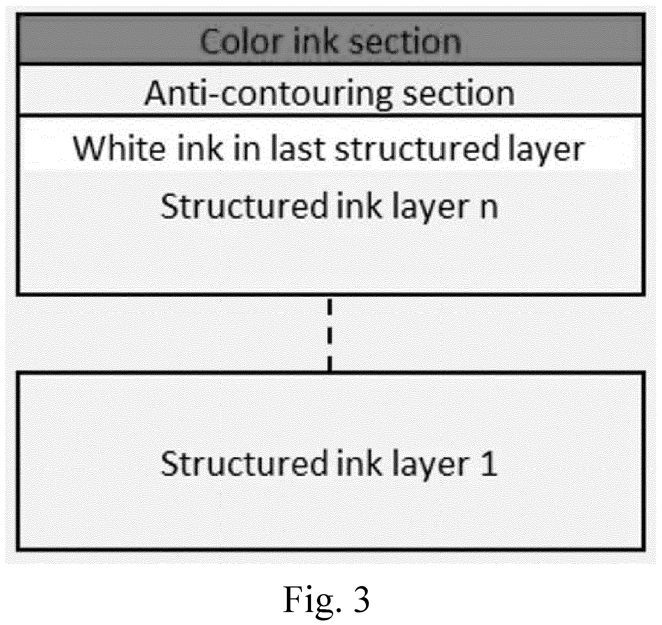

Fig. 3 is a schematic drawing of the layers according to a first embodiment of the method according to the present invention. The white ink is deposited in the last structure ink layer n in the last at least one pass of the last in time elevation layer n on top of the already deposited structure ink in the previous passes of the last in time elevation layer n. A same value of perceptual lightness L* for the last in time elevation layer n is achieved as in Fig. 2.

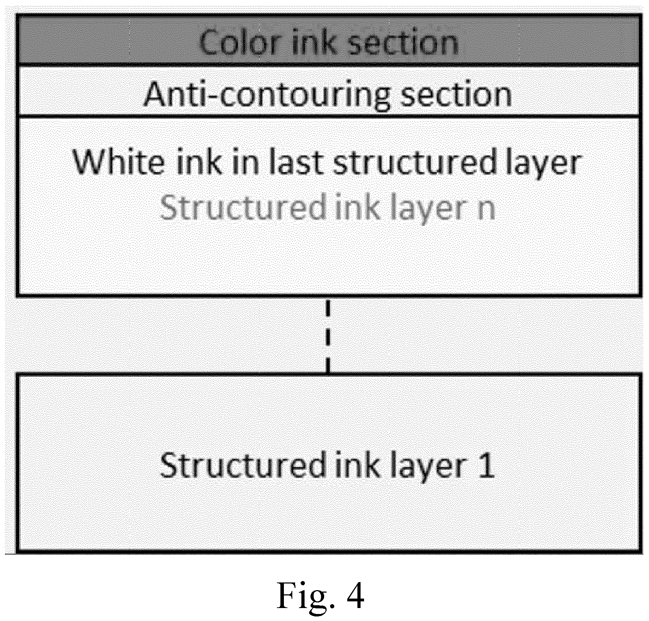

Fig. 4 is a schematic drawing of the layers according to a second embodiment of the method according to the present invention. The white ink is mixed in each pass of the last in time elevation ink layer n with the structure ink. The amount of white ink is equal to the amount of white ink of at least one white ink layer.

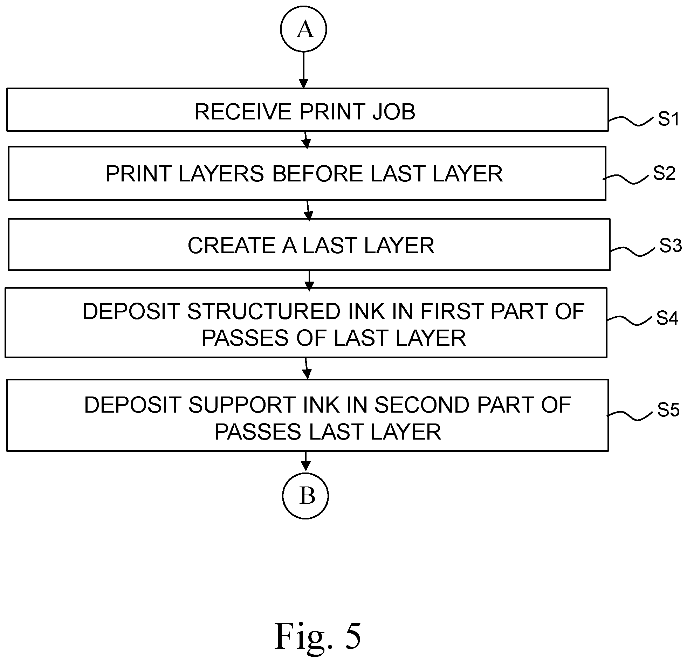

Fig. 5 is an example of a flow diagram of the method according to the first embodiment of the present invention shown in Fig. 3.

The method starts in a starting point A which leads to a first step S1.

In the first step S1 the print controller receives a print job comprising a colour image with colour information per pixel comprising a colour per pixel which is intended to be achieved by depositing the coloured ink and a height image with height information per pixel comprising a height per pixel which is intended to be achieved by depositing structure ink.

In a second step S2 the print head assembly subsequently prints the elevation layers before the last elevation layer.

In a third step S3 the print controller creating a last in time elevation layer intended to be printed in the predetermined plurality of passes.

In a fourth step S4 in a first part of the predetermined plurality of passes of the last in time elevation layer, structure ink is deposited.

In a fifth step S5 in a second part of the predetermined plurality of passes of the last in time elevation layer, depositing the supporting ink according to the present invention on top of the structure ink deposited in the first part.

In further steps the at least one anti-contouring layer and the at least one coloured layer is printed as shown in Fig. 3.

The method ends in an end point B.

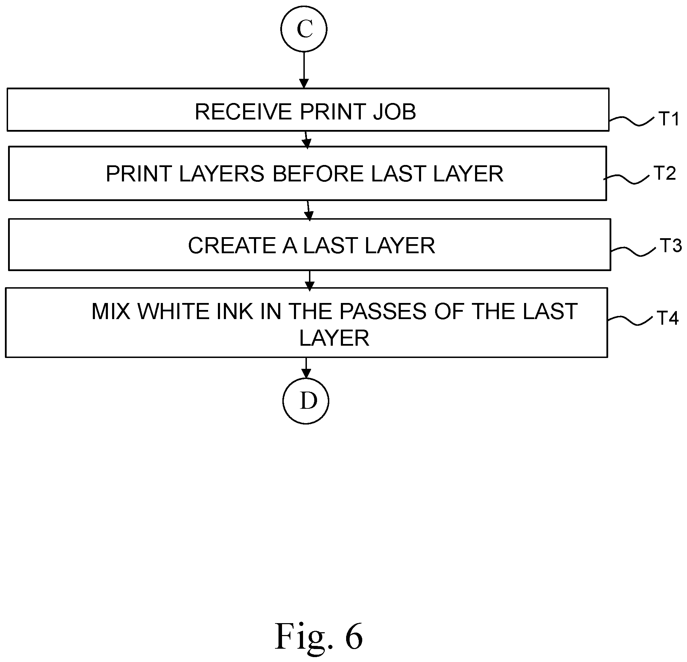

Fig. 6 is an example of a flow diagram of the method according to the second embodiment of the present invention shown in Fig. 4.

The method starts in a starting point C which leads to a first step T1.

In the first step T1 the print controller receives a print job comprising a colour image with colour information per pixel comprising a colour per pixel which is intended to be achieved by depositing the coloured ink and a height image with height information per pixel comprising a height per pixel which is intended to be achieved by depositing structure ink.

In a second step T2 the print head assembly subsequently prints the elevation layers before the last elevation layer.

In a third step T3 the print controller creating a last in time elevation layer intended to be printed in the predetermined plurality of passes.

In a fourth step T4 the last in time elevation layer is printed wherein white ink is mixed with structure ink in each pass of the last in time elevation layer.

In further steps the at least one anti-contouring layer and the at least one coloured layer is printed as shown in Fig. 4.

The method ends in an end point D.

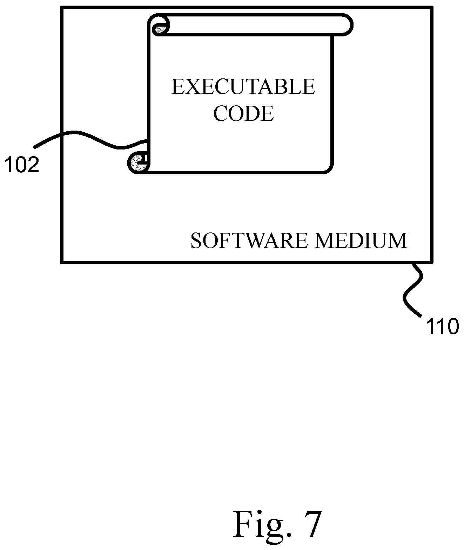

Fig. 7 schematically shows a non-transitory software medium 110 according to the invention. The software medium 110 comprises executable code 102 configured to, when executed, perform the method according to the invention, e.g. as described with respect to either the printer shown in Fig. 1 or the method shown in Figs. 3 - 6 and/or according to any of the variants and modifications of the printer and/or of the method described hereinbefore.

The non-transitory software medium 110 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

The skilled person will recognise that other embodiments are possible within the scope of the appended claims.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for a UV curable printer (5) comprising a medium support surface (11) for supporting the print media, a print head assembly for ejecting droplets of structure ink, white ink and coloured ink forming a relief print on the print media and a print controller for controlling the printing of the relief print in layers, each layer to be deposited in a predetermined plurality of passes of the print head assembly over the medium support surface (11), the method comprising the steps of
- the print controller receiving a print job comprising a colour image with colour information per pixel comprising a colour per pixel which is intended to be achieved by depositing the coloured ink, and a height image with height information per pixel comprising a height per pixel which is intended to be achieved by depositing a plurality of elevation layers of structure ink,
- the print controller determining besides the plurality of elevation layers at least one anti-contouring layer of structure ink (S) to prevent contouring artefacts and at least coloured layer of coloured ink to form the colour image,
- the print head assembly subsequently printing the plurality of elevation layers, the at least one anti-contouring layer and the at least one colour layer,
wherein the method comprises the steps of
- the print controller creating a last in time elevation layer (n) intended to be printed in the predetermined plurality of passes, wherein the last in time elevation layer is formed by droplets of structure ink and white ink.

2. A method according to claim 1, wherein the method comprises the steps of in a first part of the predetermined plurality of passes of the last in time elevation layer (n), depositing the structure ink, and in a second part of the predetermined plurality of passes of the last in time elevation layer (n), depositing the white ink on top of the structure ink deposited in the first part.

3. A method according to claim 1, wherein the method comprises the step of mixing the white ink in each pass of the last in time elevation ink layer (n) with the structure ink.

4. Method according to any of the preceding claims, wherein the method comprises the steps of the print controller receiving the print job comprising a gloss image with gloss information per pixel of the colour image, and the print head assembly depositing varnish ink on top of the coloured ink in accordance with the gloss image.

5. A UV curable printer (5) comprising a medium support surface (11) for supporting print media to be printed upon, a print head assembly for ejecting colour inks, white ink, structure ink forming a relief print on the print media and a print controller for controlling the printing of a colour image on the print media in multiple layers as to form the relief print, wherein the print controller is configured to perform the steps of a method according to any of the preceding claims.

6. A UV curable printer (5) according to claim 5, wherein the print head assembly is configured to deposit varnish ink on top of deposited coloured ink.

7. A non-transitory software medium comprising executable program code configured to, when executed on a print controller of a printer, enable the print controller to perform the steps of the method according to any of the claims 1 - 4.
